# EUROPÄISCHE PATENTSCHRIFT

(11) **EP 2 803 533 B1**
(45) Veröffentlichungstag und Bekanntmachung des Hinweises auf die Patenterteilung: **02.11.2016**
(21) Anmeldenummer: 14167924.1
(22) Anmeldetag: 12.05.2014
(51) Int. Cl.: B60R 9/04

(54) **Vorrichtung zum Anordnen einer einen Längskanal aufweisenden Leiste an einer Unterlage**
Device for assembling a rail on a support with a longitudinal channel
Dispositif destiné à agencer une barre présentant un canal longitudinal sur un support

(30) Priorität: 16.05.2013 DE 102013105061; 22.08.2013 DE 102013109067
(43) Veröffentlichungstag der Anmeldung: 19.11.2014
(73) Patentinhaber: JAC Products Europe GmbH, 42285 Wuppertal (DE); Fairchild Fasteners Europe - Camloc GmbH, 65779 Kelkheim (Taunus) (DE)
(72) Erfinder: MEIß, Ander, 42659 Solingen (DE); Steffens, Rainer, 45549 Sprockhövel (DE); Wolf, Jochim, 60431 Frankfurt (DE)
(74) Vertreter: Bungartz Christophersen Partnerschaft mbB Patentanwälte

(56) Entgegenhaltungen:
- EP-A2- 2 277 742
- DE-A1- 4 422 932
- DE-A1- 19 604 994
- DE-A1- 19 858 558
- DE-A1-102010 060 394

## Beschreibung

Die Erfindung betrifft eine Vorrichtung zum Anordnen einer einen Längskanal aufweisenden Leiste, vorzugsweise eines Hohlprofils, an einer Unterlage, wie z. B. einem Karosserieblech einer Fahrzeugkarosserie, nach dem Oberbegriff des Patentanspruchs 1.

Aus der EP 2 277 742 A2, der DE 10 2010 060 394 A1 oder der EP 1 588 897 B1 sind Vorrichtungen zum Befestigen von Profilleisten einer Dachreling außen am Karosserieblech einer Fahrzeugkarosserie bekannt. Da die äußeren Karosseriebleche bei modernen Fahrzeugkarosserien häufig nur eine dünnwandige Unterlage bilden und keine hinreichende Stabilität für die Befestigung von Anbauteilen wie insbesondere einer Dachreling bieten, erfolgt deren Verankerung nicht unmittelbar an dem äußeren Karosserieblech, sondern an unterhalb angeordneten Karosserieblechen wie z. B. Rahmenteilen oder Dachflanschen der Karosserie. Die Anbauteile und insbesondere Relingleisten sitzen daher außen auf dem Karosserieaußenblech auf, sind jedoch gegenüber der unterhalb angeordneten, steiferen Struktur fest verankert.

Allerdings müssen die Montageschritte zur Befestigung der Relingleisten teils an der Karosserieaußenseite, teils im Fahrzeuginneren oder vom Fahrzeuginneren aus durchgeführt müssen. Dies ist nachteilig, wenn ab einem bestimmten Produktionszeitpunkt Arbeiten im Inneren des Fahrzeugs oder vom Inneren des Fahrzeugs aus nicht mehr möglich oder nicht mehr zulässig sind.

Eine gattungsgemäße Vorrichtung zum Anordnen einer Leiste an einer Unterlage ist aus der DE 196 04 994 A1 bekannt. Zur Befestigung der Leiste an einer Karosseriefläche wird zunächst ein Verankerungszapfen an der Karosserie montiert. Im Bereich der Befestigung wird die ansonsten aus Vollmaterial bestehende Leiste mit einer ersten Bohrung zur Aufnahme des Verankerungszapfens, sowie mit einer zweiten Bohrung quer zur Längserstreckung der Leiste versehen. Der Verankerungszapfen erstreckt sich bis in die zweite Bohrung hinein, wobei er einen schlankeren Längsabschnitt sowie am Ende einen radial erweiterten Kopf aufweist. Ein in die zweite Bohrung eingesetzter Drehriegel greift mittels eines Schlitzes unter den Kopf. Durch Drehen des Drehriegels kommt es, da dieser innen als Exzenter gestaltet ist, zu einem Anziehen der Leiste gegen die Karosseriefläche und damit zur Befestigung der Leiste. Von Vorteil bei der Vorrichtung nach der DE 196 04 994 A1 ist, dass die Schlussmontage der Leiste auch dann noch erfolgen kann, wenn sich abschließende Montageschritte nur noch von der Fahrzeugaußenseite her erledigen lassen.

Ziel der Erfindung ist es, die abschließende Montage einer innen mit einem Längskanal versehenen Leiste und vorzugsweise eines Hohlprofils auch in solchen Situationen zu ermöglichen, in denen sich Montageschritte nur von außen her erledigen lassen. Eine hierzu geeignete Vorrichtung soll geschaffen werden.

Zur Lösung dieser Aufgabe wird eine Vorrichtung mit den Merkmalen des Anspruchs 1 vorgeschlagen.

Eine solche Vorrichtung schafft die Voraussetzung dafür, eine abschließende Montage der Leiste auch in solchen Situationen zu ermöglichen, in denen sich Montageschritte nur von außen her erledigen lassen.

Von Vorteil ist die Erfindung vor allem im Fahrzeugbau. Ist die Leiste z. B. eine Relingleiste einer Dachreling, und die Unterlage das Außenblech der Fahrzeugkarosserie, lässt sich eine abschließende Montage der Leiste außen an der Fahrzeugkarosserie selbst dann noch durchführen, wenn Arbeiten im Fahrzeuginneren oder vom Fahrzeuginneren aus nicht möglich oder nicht zulässig sind. Stattdessen sind für die abschließende Montage der Leiste nur solche Montageschritte erforderlich, die sich von außen her erledigen lassen.

Ein wichtiges konstruktives Element ist ein Verankerungsteil, welches sich durch eine Öffnung im Boden der Leiste hindurch bis in den Längskanal der Leiste erstreckt und, ausgehend von der Unterlage, einen schlankeren Längsabschnitt und daran anschließend einen zum freien Ende des Verankerungsteils hin sich erweiternden Längsabschnitt aufweist. Weiter umfasst die Vorrichtung ein in dem Längskanal angeordnetes Klemmbauteil aus zwei aufeinander zu beweglich ausgebildeten Backen, die jeweils mit einer von innen her gegen den Boden der Leiste anliegenden Druckfläche versehen sind, und zwischen sich den sich erweiternden Längsabschnitt des Verankerungsteils einklemmen.

Bevorzugte Ausgestaltungen der Vorrichtung sind in den Unteransprüchen angegeben.

Mit einer ersten Ausgestaltung wird vorgeschlagen, dass sich jede Backe mit einer gegenüber der Unterlage schräg angeordneten Fläche gegen den sich erweiternden Längsabschnitt des Verankerungsteils abstützt. Zur Verbesserung des aneinander entlang Gleitens der beteiligten schrägen Flächen ist es von Vorteil, wenn die schräg angeordnete Fläche an der Backe einerseits, und die Seitenfläche des sich erweiternden Längsabschnitts des Verankerungsteils andererseits denselben Winkel aufweisen.

Als Verankerungsteil besonders geeignet ist ein Bolzen, wobei ein an dem Bolzen ausgebildeter, vorzugsweise zylindrischer Abschnitt der schlankere Längsabschnitt, und ein an dem Bolzen ausgebildeter Kegelabschnitt der sich erweiternde Längsabschnitt ist. Der schlankere Abschnitt ist zwischen kreissegmentförmigen Ausnehmungen der Backen, und der Kegelabschnitt ist zwischen kegelsegmentförmigen Ausnehmungen der Backen aufgenommen.

Mit einer weiteren Ausgestaltung werden Federelemente vorgeschlagen, welche die zwei Backen voneinander weg beaufschlagen. Vorzugsweise sind die Federelemente einstückig mit den Backen ausgebildete und sich zwischen diesen erstreckende elastische Brücken. Die Brücken können in platzsparender Ausbildung an den in Richtung des Längskanals weisenden Enden der Backen angeformt sein.

Um während der Endmontage der Profilleiste die beiden Backen des Klemmbauteils gegeneinander zu bewegen, wird mit einer weiteren Ausgestaltung ein die Backen verbindendes und aufeinander zu spannendes Zugmittel vorgeschlagen. Ein geeignetes Zugmittel sind zum Beispiel zwei Schrauben, wobei die erste Schraube in Kanallängsrichtung vor, und die zweite Schraube in Kanallängsrichtung hinter dem Verankerungsteil angeordnet ist.

Mit einer weiteren Ausgestaltung wird hinsichtlich der Leiste vorgeschlagen, dass diese auf jenem Längsabschnitt, auf dem sich das Verankerungsteil befindet, mit einer horizontalen Seitenöffnung versehen ist, die durch eine darin einsetzbare Abdeckung verschließbar ist.

Ausführungsbeispiele der Vorrichtung zum Anordnen einer einen Längskanal aufweisenden Leiste gegen eine Unterlage werden im Folgenden anhand der zugehörigen Zeichnungen beschrieben. Darin zeigen:
- Fig. 1: eine perspektivische Ansicht eines PKW-Fahrzeugdachs mit zwei darauf befestigten, eine Dachreling bildenden Leisten in Gestalt von Profilleisten;
- Fig. 2: einen Schnitt durch die Fahrzeugkarosserie im Bereich einer Befestigung der Profilleiste;
- Fig. 3: im Bereich der Befestigung eine perspektivische Ansicht auf einen Abschnitt der Profilleiste und ein karosseriefestes Verankerungsteil;
- Fig. 4: eine perspektivische Ansicht auf ein Klemmbauteil, welches Bestandteil der Vorrichtung zur Befestigung der Profilleiste ist, wobei das Klemmbauteil im Zustand vor der Endmontage wiedergegeben ist;
- Fig. 5: in einer Draufsicht das Klemmbauteil nach Abschluss der Endmontage;
- Fig. 6: in einer zweiten Ausführungsform einen Schnitt durch die Fahrzeugkarosserie im Bereich einer der Befestigungen der Profilleiste, und
- Fig. 7: in einer dritten Ausführungsform eine Draufsicht auf ein Klemmbauteil.

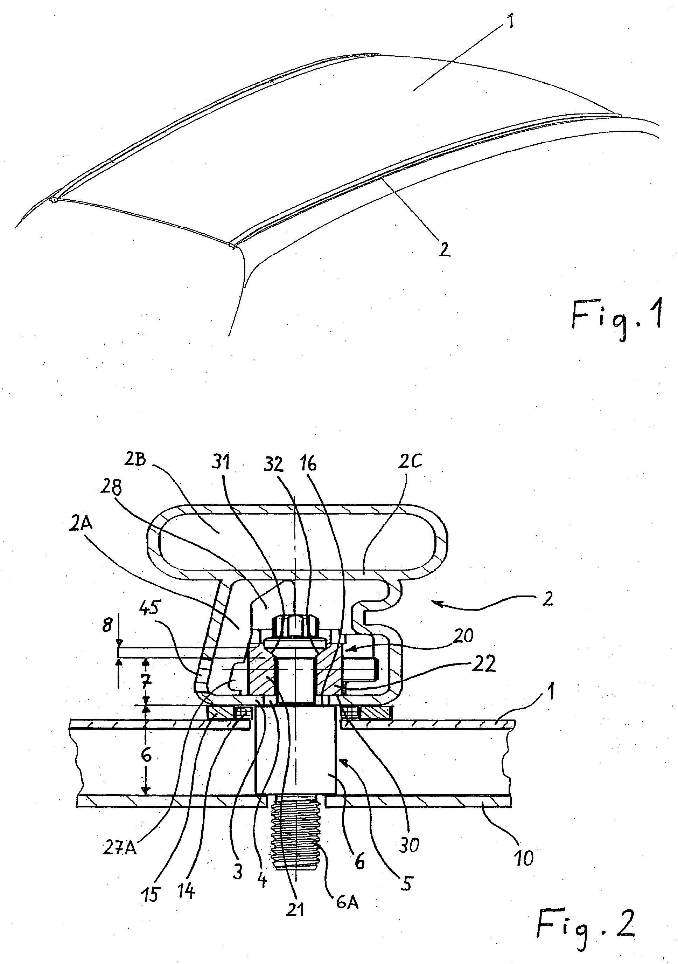

Fig. 1 zeigt das Fahrzeugdach eines PKW mit zwei darauf jeweils in Fahrzeuglängsrichtung verlaufenden Profilleisten, wie sie auch als "Dachreling" bezeichnet werden. Derartige Leisten dienen als Lastaufnahmen für Querträger von z. B. Fahrradständern, Skiträgern, Dachboxen etc.

Vorzugsweise ist die Leiste 2 an ihren beiden Enden in geeigneter Weise verschlossen, und an zwei oder mehr Stellen ihrer Länge gegen eine Unterlage 1 befestigt, hier gegen die Außenseite des Karosserieblechs einer Fahrzeugkarosserie. Die folgende Beschreibung bezieht sich auf den konstruktiven Aufbau an diesen mindestens zwei Befestigungsstellen.

Gemäß Fig. 2 ist die Profilleiste 2 ein Hohlprofil und insbesondere ein Relingprofil einer Fahrzeug-Dachreling, dessen der Außenseite des Karosserieaußenblechs zugewandter Boden 3 entweder geschlossen mit nur einzelnen, an den Befestigungsstellen angeordneten Öffnungen 4 ist, oder aber mit einer durchgehenden Öffnung 4 ähnlich einem Schlitz versehen ist. Aus Gründen der Festigkeit des Profils ist die erste Variante zu bevorzugen.

An seiner dem Boden 3 abgewandten Außenwand 2C ist das Hohlprofil 2 vollständig geschlossen. Auch die beiden Seitenwände des Hohlprofils 2 sind geschlossen, jedoch verfügt die eine Seitenwand im Bereich der hier beschriebenen Befestigungsstelle, aber auch nur dort, über eine relativ kleine Seitenöffnung 45, die Montagezwecken dient und im Anschluss durch eine Abdeckung verschließbar ist.

Beim Ausführungsbeispiel ist die Leiste 2 eine Profilleiste mit Doppelkammerprofil, denn sie weist zusätzlich zu dem ersten, im Boden 3 mit den Öffnungen 4 versehenen Längskanal 2A einen außen darüber angeordneten zweiten Längskanal 2B auf, wobei die geschlossene Außenwand 2C des Längskanals 2A zugleich die Trennwand zwischen den beiden Längskanälen 2A, 2B ist. Der zweite Längskanal 2B ist an allen vier Profilseiten geschlossen. Zwischen dem Boden 3 der Leiste 2 und der Außenseite des Karosserieblechs 1 ist an jeder Befestigungsstelle eine ringförmige Dichtung 14 angeordnet. Außerdem befindet sich zwischen dem Boden 3 der Leiste 2 und der Unterlage 1, also der Außenseite des Karosserieblechs, eine flächig gestaltete Schaumunterlage 15.

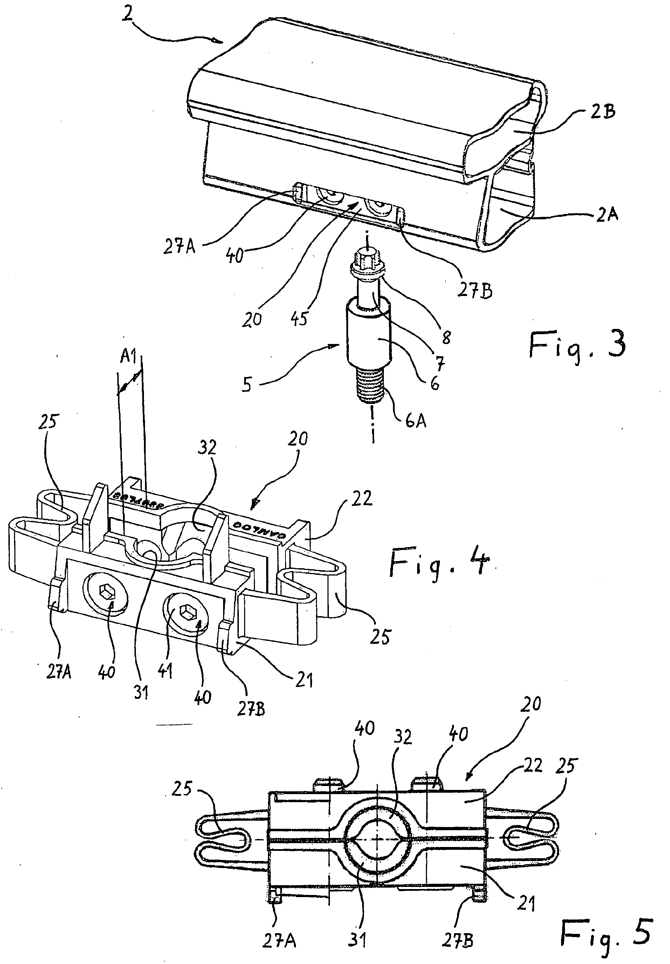

Für eine Verankerung der hohe Lasten aufnehmenden Profilleiste 2 ist das Karosserieblech 1 für sich alleine betrachtet nicht immer geeignet, wenn es zu dünnwandig für eine Lastaufnahme ist. Stattdessen wird bei den Ausführungsformen nach Fig. 2 und Fig. 3 zur Verankerung der Profilleiste 2 die erhöhte Steifigkeit einer Karosseriestruktur 10 ausgenutzt, die sich im Abstand unterhalb des Karosserieblechs 1 befindet. Bei der Karosseriestruktur 10 handelt es sich zum Beispiel um ein Karosserieprofil mit entsprechend hoher Festigkeit. Über zwei oder mehr Verankerungsteile 5 ist die Profilleiste 2 starr an dieser Karosseriestruktur 10 befestigt. Die an den einzelnen Befestigungsstellen zu positionierenden Verankerungsteile 5 lassen sich vorab an der Fahrzeugkarosserie befestigen, also vor der Endmontage der Profilleiste. Sind die Verankerungsteile 5 befestigt, lassen sich alle weiteren, für die Endmontage der Profilleiste 2 erforderlichen Handgriffe von außen her erledigen. Dies ist vor allem dann von Vorteil, wenn ab einem bestimmten Produktionszeitpunkt Handgriffe im Fahrzeuginneren oder vom Fahrzeuginneren aus nicht mehr möglich oder nicht mehr zulässig sind.

Als karosseriefestes Verankerungsteil 5 dient hier ein in besonderer Weise gestalteter Bolzen. Dieser setzt sich, von innen nach fahrzeugaußen betrachtet, aus einem Gewindeabschnitt 6A, einem relativ dicken Längsabschnitt 6, einem im Vergleich schlankeren Längsabschnitt 7 und einem Längsabschnitt 8 zusammen, der sich unter Bildung einer schrägen Fläche nach fahrzeugaußen hin konisch erweitert.

Den Abschluss des Verankerungsteils 5 kann ein Mehrkantabschnitt bilden, der die Montage des Verankerungsteils 5 erleichtert.

Seine größte Dicke weist das Verankerungsteil 5 im Bereich des Längsabschnitts 6 auf. Der Längsabschnitt 6 stützt sich mit seiner Unterseite rund um eine Öffnung der Karosseriestruktur 10 ab, während sich der Gewindeabschnitt 6A unterhalb der Karosseriestruktur 10 und der Öffnung befindet. Durch Aufschrauben einer Gewindemutter auf den Gewindeabschnitt 6A lässt sich das Verankerungsteil 5 starr mit der Karosseriestruktur 10 verbinden, wobei der relativ dicke Längsabschnitt 6 des Verankerungsteils durch eine Öffnung im Karosserieblech 1 hindurch ragt.

Durch den Übergang zwischen dem weiten Längsabschnitt 6 und dem schlanken Längsabschnitt 7 entsteht eine ringförmige Auflage 16, auf der sich der Boden 3 der Profilleiste 2 rund um die Öffnung 4 abstützt. Es besteht daher kein direkter Kontakt der Profilleiste 2 mit dem Karosserieblech 1. Stattdessen kommt es zwischen der Profilleiste 2 und dem Karosserieblech 1 nur zu einer indirekten Verbindung über die dazwischen angeordneten Dichtungen 14 und die flächige Schaumunterlage 15. Sowohl die Dichtungen 14 als auch die Schaumunterlage 15 sind unter Druck kompressibel.

Durch die im Folgenden näher beschriebenen Maßnahmen wird, unter Einsatz des Verankerungsteils 5 als Widerlager, die Profilleiste 2 von außen gegen das Karosserieblech 1 gespannt, wobei sich die Dichtungen 14 und die Schaumunterlage 15 komprimieren und so eine vollständige Abdichtung zwischen der Profilleiste und der Außenseite des Karosserieblechs erzielt wird.

An jeder Befestigungsstelle und somit dort, wo ein Verankerungsteil 5 durch das Karosserieblech 1 hindurchragt, ist in dem Längskanal 2A ein Klemmbauteil 20 angeordnet und vorläufig positioniert. Das Klemmbauteil 20 besteht vorzugsweise aus Kunststoff und setzt sich aus zwei parallel zueinander angeordneten Backen 21, 22 zusammen, die über als Federelemente wirkende, elastische Brücken 25 verbunden sind. Fertigungstechnisch ist es von Vorteil, wenn das Klemmbauteil einschließlich der Backen 21, 22 und der elastischen Brücken 25 ein einstückiges Kunststoffspritzteil ist.

Die federnden Brücken 25 befinden sich an den in Richtung des Längskanals 2A weisenden Enden der Backen 21, 22 und sind so ausgebildet, dass die beiden Backen 21, 22 im Ruhezustand voneinander weg gespreizt sind, wobei ihre Innenseiten einen Abstand A1 zueinander aufweisen. In diesem Ruhezustand stützt sich die eine Backe 21 unter leichtem Federdruck von innen gegen die eine Seitenwand, und die andere Backe 22 unter leichtem Federdruck von innen gegen die andere Seitenwand der Profilleiste 2 ab.

Während des Aufsetzens der Profilleiste 2 auf die Verankerungsteile 5 ist es von Vorteil, wenn die richtige Lage des Klemmbauteils 20 in Profillängsrichtung sichergestellt ist. Dies wird einerseits durch das bereits beschriebene Anliegen der Backen 21, 22 von innen her gegen die Profilseitenwände erreicht. Als zusätzliche Maßnahme ist die Backe 21 des Klemmbauteils 20 mit seitlichen Vorsprüngen 27A, 27B versehen. Die Vorsprünge 27A, 27B greifen in die in der betreffenden Seitenwand vorhandene Seitenöffnung 45 ein und verriegeln das Klemmbauteil 20 in Längsrichtung in der Profilleiste 2. Für die richtige Lage des Klemmbauteils 20 ist schließlich eine Rippe 28 von Vorteil, die an der einen Backe angeformt ist und von innen gegen die Wand 2C anliegt.

Nachdem die Profilleiste auf das Fahrzeugdach aufgesetzt ist, wobei sich das Verankerungsteil 5 zwischen den beiden Backen 21, 22 befindet, werden die Backen 21, 22 durch mindestens ein Zugmittel 40 gegeneinander gezogen, so dass ihre Innenseiten nicht mehr den ursprünglichen Abstand A1, sondern nur noch einen geringeren Abstand A2 (Fig. 5) aufweisen, der auch zu nahezu Null werden kann.

Als Zugmittel 40 dienen hier zwei Schrauben, von denen die erste Schraube 40 in Profillängsrichtung vor, und die zweite Schraube 40 in Profillängsrichtung hinter dem Verankerungsteil 5 angeordnet ist. Die Köpfe 41 der Schrauben 40 sind gegenüberliegend zu der Seitenöffnung 45 angeordnet. Durch die Seitenöffnung 45 hindurch lässt sich daher ein entsprechendes Schraubwerkzeug an die Schrauben 40 ansetzen, um die Backen 21, 22 unter Einklemmen des Verankerungsteils 5 gegeneinander zu ziehen.

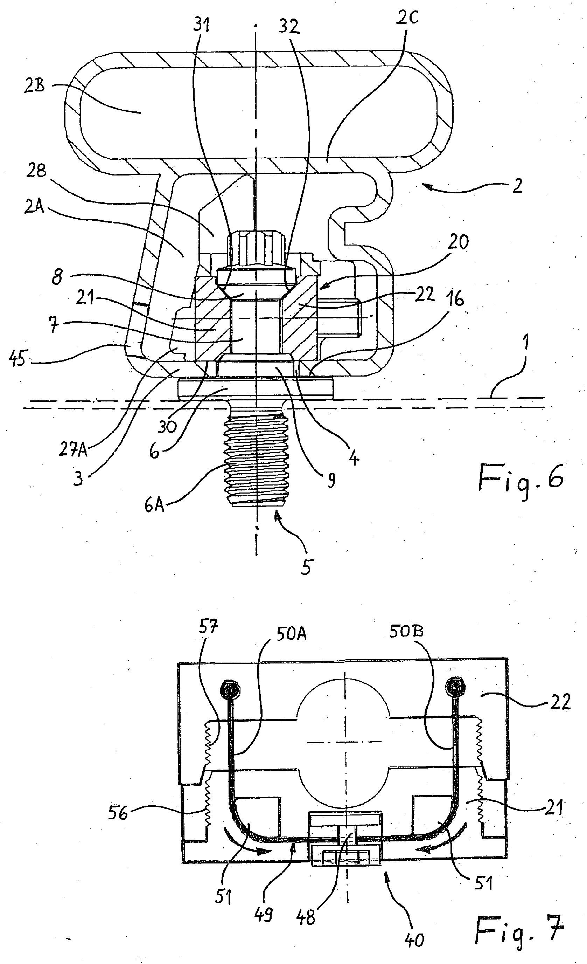

Um das gegeneinander Ziehen der Backen 21, 22 in eine nach unten, d. h. zu der Fahrzeugkarosserie hin gerichtete Druckkraft umzulenken, sind sowohl die Backen 21, 22 als auch das Verankerungsteil 5 mit zueinander korrespondierenden Rampen oder schrägen Flächen versehen. Hierzu ist das Verankerungsteil 5 im Anschluss an den relativ schlanken Längsabschnitt 7 mit dem sich nach außen hin kegelförmig erweiternden Längsabschnitt 8 versehen, dessen maximaler Durchmesser nicht größer als der Durchmesser einer kurzen Stufe 9 (Fig. 6) ist.

Korrespondierend zu dem Kegelabschnitt 8 sind die Backen 21, 22 mit kreissegmentförmigen und daran anschließenden kegelsegmentförmigen Ausnehmungen 31, 32 versehen, wobei der Längsabschnitt 7 zwischen den kreissegmentförmigen Ausnehmungen, und der Kegelabschnitt 8 zwischen den kegelsegmentförmigen Ausnehmungen 31, 32 der Backen 21, 22 aufgenommen ist.

Werden die Backen 21, 22 gegeneinander gezogen, kommt es entlang der korrespondierenden Schrägen bzw. Rampen zu einer nach unten gerichteten, resultierenden Kraft auf die Backen, d. h. zu einer Kraft zu der Fahrzeugkarosserie hin. Durch diese resultierende Kraft pressen die Backen 21, 22 mit ihren als Druckflächen 30 dienenden Unterseiten gegen den Boden 3 der Profilleiste 2. Der hierdurch auf die Profilleiste 21 ausgeübte vertikale Druck führt zu dem bereits erwähnten teilweisen Komprimieren der unmittelbar um die jeweilige Öffnung 4 herum angeordneten Dichtung 14 sowie der Schaumunterlage 15.

Die an den Backen 21, 22 ausgebildeten, konischen oder kegelsegmentförmigen Klemmflächen 31, 32 weisen vorzugsweise denselben Winkel zur Karosserieaußenseite auf, wie der kegelförmig sich erweiternde Längsabschnitt 8 des Verankerungsteils 5. Auf diese Weise können die Klemmflächen 31, 32 relativ reibungsarm an dem Kegelabschnitt 8 entlang gleiten.

Sind die das Zugmittel 40 bildenden Schrauben fest angezogen, wird die horizontale Seitenöffnung 45 nicht mehr benötigt. Sie kann durch eine geeignete, darin einsetzbare Abdeckung verschlossen werden. Die Abdeckung kann farblich auf die Gestaltung der Profilleiste 2 abgestimmt sein.

Bei der Ausführungsform nach Fig. 6 weist das Verankerungsteil 5 einen gegenüber Fig. 2 deutlich verkürzten Längsabschnitt 6 auf. Die Befestigung des Verankerungsteils 5 erfolgt hier an dem Karosserieblech 1, und nicht an einer unterhalb angeordneten Karosseriestruktur. Außerdem weist das Verankerungsteil 5 im Übergang zwischen den beiden Längsabschnitten 6 und 7 die umlaufende Stufe 9 auf. Deren Durchmesser ist kleiner als der Durchmesser des Längsabschnitts 6, aber größer als der Durchmesser des Längsabschnitts 7. Dadurch ergibt sich um die Stufe 9 herum die ringförmige Auflage 16 für den Boden 3 des Profils. Da zudem die vorzugsweise runde Öffnung 4 im Boden 3 der Profilleiste eine zwar deutlich kleinere Weite als der Längsabschnitt 6, jedoch eine nur geringfügig größere Weite als die Stufe 9 aufweist, kommt es zu einer Zentrierung der Öffnung 4 an der Stufe 9, und damit zu einer genaueren Positionierung der Profilleiste 2, während diese auf das Fahrzeugdach aufgesetzt wird.

Die Fig. 7 zeigt eine Ausführungsform eines Zugmittels 40, mit dem sich das Klemmbauteil 20 zentral anziehen lässt. Dazu ist in der einen Backe 21 eine von außen her mittels eines Schraubwerkzeugs drehbare Wickelachse 48 drehgelagert. An der Wickelachse 48 festgelegt ist der Mittelabschnitt eines Zugdrahts 49, der im Klemmbauteil zweiarmig geführt ist, wobei jeder Arm 50A, 50B über jeweils eine in der Backe 21 angeordnete Umlenkung 51 bis in die andere Backe 22 reicht, und dort befestigt ist. Durch Drehen wird der Zugdraht 49 auf der Wickelachse 48 gewickelt, wodurch die Backe 22 unter Zwischenlage des in Fig. 6 nicht dargestellten Verankerungsteils 5 gegen die Backe 21 gezogen wird.

An den zwei Backen 21, 22 ausgebildete Rastelemente 56, 57 stellen sicher, dass die Backen 21, 22 ihre einmal erreichte Klemmposition dauerhaft beibehalten.

Die voranstehend beschriebene Vorrichtung eignet sich nicht nur für das Anordnen von Anbauteilen an oder in einer Fahrzeugkarosserie, sondern auch für Befestigungszwecke außerhalb des Fahrzeugbereichs.

### Bezugszeichenliste

- 1: Unterlage, Karosserieblech
- 2: Leiste, Hohlprofil
- 2A: Längskanal
- 2B: Längskanal
- 2C: Außenwand
- 3: Boden
- 4: Öffnung
- 5: Verankerungsteil
- 6: Längsabschnitt
- 7: Längsabschnitt
- 8: sich erweiternder Längsabschnitt
- 9: Stufe
- 10: Karosseriestruktur
- 14: Dichtung
- 15: Schaumunterlage
- 16: Auflage
- 20: Klemmbauteil
- 21: Backe
- 22: Backe
- 25: elastische Brücke
- 27A: Vorsprung
- 27B: Vorsprung
- 28: Rippe
- 30: Druckfläche
- 31: Klemmfläche
- 32: Klemmfläche
- 40: Zugmittel, Schraube
- 41: Schraubenkopf
- 45: Seitenöffnung
- 48: Wickelachse
- 49: Zugdraht
- 50A: Arm
- 50 B: Arm
- 51: Umlenkung
- 56: Rastelement
- 57: Rastelement

- A1: Abstand
- A2: Abstand

## Patentansprüche

1. Vorrichtung zum Anordnen einer Leiste (2) an einer Unterlage (1), mit einem Verankerungsteil (5), welches sich durch eine Öffnung (4) im Boden (3) der Leiste (2) hindurch bis in die Leiste (2) erstreckt und, ausgehend von der Unterlage (1), einen schlankeren Längsabschnitt (7) und mindestens einen erweiterten Längsabschnitt (8) aufweist, und mit einem in der Leiste (2) angeordneten Klemmbauteil (20), **dadurch gekennzeichnet, dass** die Leiste (2) einen Längskanal (2A) aufweist, bis in den das Verankerungsteil (5) sich erstreckt, dass der erweiterte Längsabschnitt (8) zum freien Ende des Verankerungsteils (5) hin sich erweiternd ausgebildet ist, und dass das Klemmbauteil (20) in dem Längskanal (2A) angeordnet ist und aus zwei aufeinander zu beweglich ausgebildeten Backen (21, 22) besteht, die jeweils mit einer von innen her gegen den Boden (3) der Leiste (2) anliegenden Druckfläche (30) versehen sind, und zwischen sich den sich erweiternden Längsabschnitt (8) des Verankerungsteils (5) einklemmen.

2. Vorrichtung nach Anspruch 1, **dadurch gekennzeichnet, dass** sich jede Backe (21, 22) mit einer gegenüber der Unterlage (1) schräg angeordneten Fläche (31, 32) gegen den sich erweiternden Längsabschnitt (8) des Verankerungsteils (5) abstützt.

3. Vorrichtung nach Anspruch 2, **dadurch gekennzeichnet, dass** zur flächigen Anlage jeder Backe (21, 22) an dem Verankerungsteil (5) die schräg angeordnete Fläche (31, 32) und die Seitenfläche des sich erweiternden Längsabschnitts (8) denselben Winkel aufweisen.

4. Vorrichtung nach einem der vorangehenden Ansprüche, **dadurch gekennzeichnet, dass** das Verankerungsteil (5) ein Bolzen ist, dass ein daran angeformter, vorzugsweise zylindrischer Abschnitt der schlankere Längsabschnitt (7) und ein daran angeformter Kegelabschnitt der sich erweiternde Längsabschnitt (8) ist, und dass der schlankere Abschnitt (7) zwischen kreissegmentförmigen Ausnehmungen, und der Kegelabschnitt (8) zwischen kegelsegmentförmigen Ausnehmungen der Backen (21, 22) aufgenommen ist.

5. Vorrichtung nach einem der vorangehenden Ansprüche, **gekennzeichnet durch** Federelemente, welche die zwei Backen (21, 22) voneinander weg beaufschlagen.

6. Vorrichtung nach Anspruch 5, **dadurch gekennzeichnet, dass** die Federelemente einstückig mit den Backen (21, 22) ausgebildete und sich zwischen diesen erstreckende elastische Brücken (25) sind, wobei die elastischen Brücken (25) vorzugsweise an den in Richtung des Längskanals (2A) weisenden Enden der Backen (21, 22) angeformt sind.

7. Vorrichtung nach einem der vorangehenden Ansprüche, **gekennzeichnet durch** mindestens ein die Backen (21, 22) verbindendes und aufeinander zu spannendes Zugmittel (40).

8. Vorrichtung nach Anspruch 7, **gekennzeichnet durch** Schrauben als Zugmittel (40), wobei eine erste Schraube (40) in Kanallängsrichtung vor, und eine zweite Schraube (40) in Kanallängsrichtung hinter dem Verankerungsteil (5) angeordnet ist.

9. Vorrichtung nach einem der vorangehenden Ansprüche, **dadurch gekennzeichnet, dass** die Leiste (2) auf jenem Längsabschnitt, auf dem sich das Verankerungsteil (5) befindet, mit einer horizontalen Seitenöffnung (45) versehen ist.

10. Vorrichtung nach Anspruch 9, **dadurch gekennzeichnet, dass** die Seitenöffnung (45) durch eine darin einsetzbare Abdeckung verschlossen ist.

11. Vorrichtung nach Anspruch 9 oder 10, **dadurch gekennzeichnet, dass** am Ort der horizontalen Seitenöffnung (45) das Klemmbauteil (20) mit seitlichen Vorsprüngen (27A, 27B) versehen ist.

12. Vorrichtung nach einem der vorangehenden Ansprüche, **dadurch gekennzeichnet, dass** das Verankerungsteil (5) im Übergang zwischen den beiden Längsabschnitten (8, 7) mit einer umlaufenden Stufe (9) versehen ist, deren axiale Länge geringer als, höchstens gleich der Wanddicke des Bodens (3) ist.

## Claims

1. Device for arranging a strip (2) on a support (1), with an anchoring part (5) which extends into the strip (2) through an opening (4) in the bottom (3) of the strip (2) and, starting from the support (1), has a relatively slender longitudinal portion (7) and at least one widened longitudinal portion (8), and with a clamping component (20) arranged in the strip (2), **characterized in that** the strip (2) has a longitudinal channel (2A) into which the anchoring part (5) extends, **in that** the widened longitudinal portion (8) is designed to widen towards the free end of the anchoring part (5) and **in that** the clamping component (20) is arranged in the longitudinal channel (2A) and consists of two jaws (21, 22) which are designed to be movable towards one another and which are each provided with a pressing surface (30) bearing from inside against the bottom (3) of the strip (2), said jaws clamping the widening longitudinal portion (8) of the anchoring part (5) between them.

2. Device according to Claim 1, **characterized in that** each jaw (21, 22) is supported against the widening longitudinal portion (8) of the anchoring part (5) by a surface (31, 32) which is arranged obliquely with respect to the support (1).

3. Device according to Claim 2, **characterized in that**, in order for each jaw (21, 22) to bear flat against the anchoring part (5), the obliquely arranged surface (31, 32) and the lateral surface of the widening longitudinal portion (8) have the same angle.

4. Device according to one of the preceding claims, **characterized in that** the anchoring part (5) is a bolt, **in that** a preferably cylindrical portion integrally formed thereon is the relatively slender longitudinal portion (7) and a conical portion integrally formed thereon is the widening longitudinal portion (8), and **in that** the relatively slender portion (7) is accommodated between circle-segment-shaped recesses of the jaws (21, 22), and the conical portion (8) is accommodated between circle-segment-shaped recesses of the jaws (21, 22).

5. Device according to one of the preceding claims, **characterized by** spring elements which urge the two jaws (21, 22) away from one another.

6. Device according to Claim 5, **characterized in that** the spring elements are elastic bridges (25) which are formed in one piece with the jaws (21, 22) and extend between them, wherein the elastic bridges (25) are preferably integrally formed on the ends of the jaws (21, 22) that point in the direction of the longitudinal channel (2A).

7. Device according to one of the preceding claims, **characterized by** at least one pulling means (40) which connects the jaws (21, 22) and braces them towards one another.

8. Device according to Claim 7, **characterized by** screws as pulling means (40), wherein a first screw (40) is arranged in front of the anchoring part (5) in the channel longitudinal direction, and a second screw (40) is arranged behind the anchoring part (5) in the channel longitudinal direction.

9. Device according to one of the preceding claims, **characterized in that** the strip (2) is provided with a horizontal side opening (45) on that longitudinal portion on which the anchoring part (5) is situated.

10. Device according to Claim 9, **characterized in that** the side opening (45) is closed by a covering which can be inserted therein.

11. Device according to Claim 9 or 10, **characterized in that** the clamping component (20) is provided with lateral projections (27A, 27B) at the location of the horizontal side opening (45).

12. Device according to one of the preceding claims, **characterized in that**, at the transition between the two longitudinal portions (8, 7), the anchoring part (5) is provided with a peripheral step (9) whose axial length is less than or at most equal to the wall thickness of the bottom (3).

## Revendications

1. Dispositif servant à agencer une barre (2) sur un support (1), comprenant une pièce d'ancrage (5), qui s'étend à travers une ouverture (4) ménagée dans le fond (3) de la barre (2) jusque dans la barre (2) et qui présente à partir du support (1) un segment longitudinal plus mince (7) et au moins un segment longitudinal élargi (8), et un composant de serrage (20) disposé dans la barre (2), **caractérisé en ce que** la barre (2) présente un canal longitudinal (2A) jusque dans lequel la pièce d'ancrage (5) s'étend, **en ce que** le segment longitudinal élargi (8) est conformé en s'élargissant en direction de l'extrémité libre de la pièce d'ancrage (5) et **en ce que** le composant de serrage (20) est disposé dans le canal longitudinal (2A) et se compose de deux mâchoires (21, 22), conformées de manière à pouvoir se déplacer l'une vers l'autre, qui sont pourvues chacune d'une surface de pression (30) en appui de l'intérieur contre le fond (3) de la barre (2) et qui ensement entre elles le segment longitudinal s'élargissant (8) de la pièce d'ancrage (5).

2. Dispositif selon la revendication 1, **caractérisé en ce que** chaque mâchoire (21, 22) s'appuie contre le segment longitudinal s'élargissant (8) de la pièce d'ancrage (5) par une surface (31, 32) disposée en biais par rapport au support (1).

3. Dispositif selon la revendication 2, **caractérisé en ce que**, pour un appui plan de chaque mâchoire (21, 22) sur la pièce d'ancrage (5), la surface disposée en biais (31, 32) et la surface latérale du segment longitudinal s'élargissant (8) présentent le même angle.

4. Dispositif selon l'une des revendications précédentes, **caractérisé en ce que** la pièce d'ancrage (5) est un boulon, **en ce qu'**un segment, de préférence cylindrique, formé sur celle-ci est le segment longitudinal plus mince (7) et un segment conique formé sur celle-ci est le segment longitudinal s'élargissant (8), et **en ce que** le segment plus mince (7) est reçu entre des creux en forme de segment de cercle et le segment conique (8) est reçu entre des creux en forme de segment de cône des mâchoires (21, 22).

5. Dispositif selon l'une des revendications précédentes, **caractérisé par** des éléments à ressort qui forcent les deux mâchoires (21, 22) à s'écarter l'une de l'autre.

6. Dispositif selon la revendication 5, **caractérisé en ce que** les éléments à ressort sont des ponts élastiques (25) qui sont formés d'un seul tenant avec les mâchoires (21, 22) et s'étendent entre celles-ci, les ponts élastiques (25) étant formés de préférence sur les extrémités des mâchoires (21, 22) orientées en direction du canal longitudinal (2A).

7. Dispositif selon l'une des revendications précédentes, **caractérisé par** au moins un moyen de traction (40) qui relie les mâchoires (21, 22) et les contraint l'une en direction de l'autre.

8. Dispositif selon la revendication 7, **caractérisé par** des vis servant de moyen de traction (40), une première vis (40) étant disposée avant et une deuxième vis (40) après la pièce d'ancrage (5) dans le sens longitudinal du canal.

9. Dispositif selon l'une des revendications précédentes, **caractérisé en ce que** la barre (2) est pourvue d'une ouverture latérale horizontale (45) sur le segment longitudinal sur lequel la pièce d'ancrage (5) se trouve.

10. Dispositif selon la revendication 9, **caractérisé en ce que** l'ouverture latérale (45) est fermée par un cache qui peut être inséré dedans.

11. Dispositif selon la revendication 9 ou la revendication 10, **caractérisé en ce que** le composant de serrage (20) est pourvu de saillies latérales (27A, 27B) à l'endroit de l'ouverture latérale horizontale (45).

12. Dispositif selon l'une des revendications précédentes, **caractérisé en ce que**, dans la transition entre les deux segments longitudinaux (8, 7), la pièce d'ancrage (5) est pourvue d'un gradin périphérique (9) dont la longueur axiale est inférieure ou au maximum égale à l'épaisseur de paroi du fond (3).
